# EUROPÄISCHE PATENTANMELDUNG

(11) **EP 0 769 533 A1**
(43) Veröffentlichungstag der Anmeldung: **23.04.1997**
(21) Anmeldenummer: 96116042.1
(22) Anmeldetag: 07.10.1996
(51) Int. Cl.: C09B 62/09, C09B 62/25, C09B 62/01, C09B 62/503

(54) **Disazoreaktivfarbstoffe**

(30) Priorität: 20.10.1995 DE 19539076
(71) Anmelder: BAYER AG, 51368 Leverkusen (DE)
(72) Erfinder: Jäger, Horst, Dr., 51375 Leverkusen (DE)

(57) **Zusammenfassung**

Azoreaktivfarbstoffe der Formel

X¹-B¹-D¹-N=N-K¹-Y-K²-N=N-D²-B²-X² (1)

worin
- D¹ und D²: gleich oder verschieden sind und für einen gegebenenfalls substituierten Benzol- oder Naphthalinkern stehen;
- B¹ und B²: gleich oder verschieden sind und ein zweiwertiges Brückenglied bedeuten;
- X¹ und X²: gleich oder verschieden sind und für einen heterocyclischen faserreaktiven Rest stehen;
- Y: für einen bifunktionellen Acylrest der aliphatischen oder aromatischen Reihe steht;
- K¹ und K²: gleich oder verschieden sind und für den Rest einer Kupplungskomponente mit wenigstens 2 Sulfogruppen oder der Formel 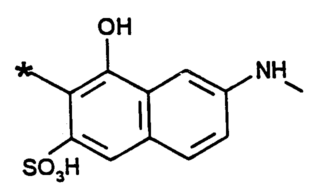 stehen,
wobei die mit einem Stern gekennzeichnete Bindung an die Azogruppe geknüpft ist,
eignen sich als Reaktivfarbstoffe für das Färben oder Bedrucken von Substraten.

## Beschreibung

Die Erfindung betrifft neue Reaktivfarbstoffe, ihre Verwendung und Herstellung.

Azofarbstoffe mit zwei Azogruppen, die faserreaktive Reste enthalten, sind bereits bekannt, siehe DE-A-2 515 137 und EP-A-387 589. Die bekannten Farbstoffe weisen aber noch anwendungstechnische Nachteile auf. Die vorliegende Erfindung betrifft Azoreaktivfarbstoffe der Formel

X¹-B¹-D¹-N=N-K¹-Y-K²-N=N-D²-B²-X² (1)

worin
- D¹ und D²: gleich oder verschieden sind und für einen gegebenenfalls substituierten Benzol- oder Naphthalinkern stehen;
- B¹ und B²: gleich oder verschieden sind und ein zweiwertiges Brückenglied bedeuten;
- X¹ und X²: gleich oder verschieden sind und für einen heterocyclischen faserreaktiven Rest stehen;
- Y: für einen bifunktionellen Acylrest der aliphatischen oder aromatischen Reihe steht;
- K¹ und K²: gleich oder verschieden sind und für den Rest einer Kupplungskomponente mit wenigstens 2 Sulfogruppen oder der Formel 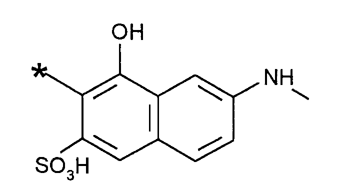
stehen,
wobei die mit einem Stern gekennzeichnete Bindung an die Azogruppe geknüpft ist.

Besonders bevorzugte Kupplungskomponenten K¹ und K² entsprechen folgender Formeln

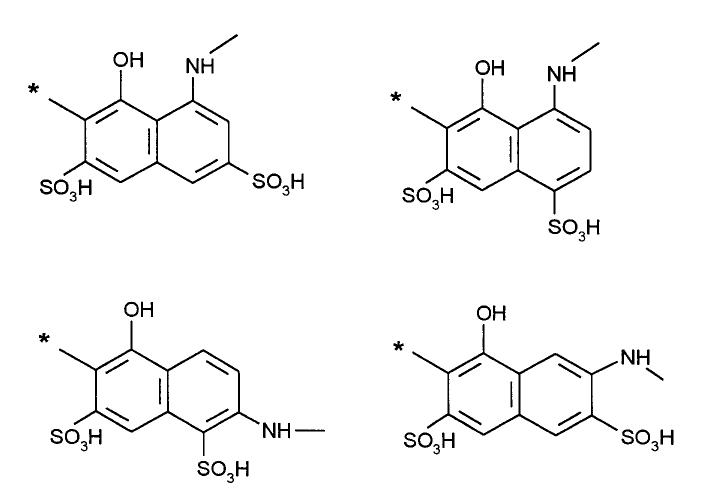

Beispiele für Substituenten der Benzol- bzw. Naphthalinkerne D¹ und D² sind C₁-C₄-Alkyl, insbesondere Methyl, C₁-C₄-Alkoxy, insbesondere Methoxy, Halogen, insbesondere Chlor, die Sulfo- und Carboxygruppe.

Als Beispiel für zweiwertige Brückenglieder B¹ und B² seien folgende genannt: 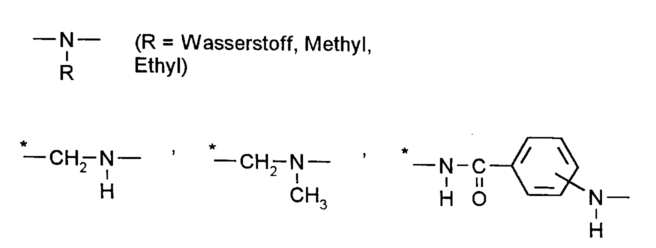 wobei die mit einem Stern gekennzeichnete Bindung an den Rest D¹ bzw. D² geknüpft ist.

Beispiele für bifunktionelle Acylreste Y sind: 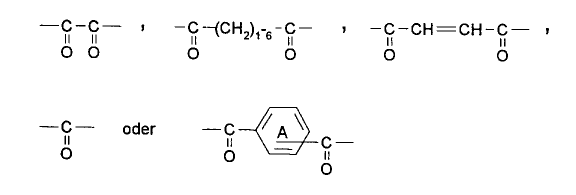 worin die beiden Carbonylgruppen des Benzolringes A in o-, m- oder p-Stellung zueinander stehen und der Benzolring A durch Cl, CH₃ oder OCH₃ substituiert sein kann.

Geeignete faserreaktive Reste X¹ und X², d.h. solche, die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin-und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido (N₃), Rhodanido, Thiolether, Oxiether, Sulfinsäure und Sulfonsäure.

Im einzelnen sind beispielsweise zu nennen:
2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl vorzugsweise gegebenenfalls substituiertes Phenyl-C₁-C₄-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, C₂-C₄-Alkoxy, Vinylsulfonyl-C₂-C₄-Alkoxy, substituierte Alkylsulfonyl-C₂-C₄-Alkoxy, Carboxy, Sulfo oder Sulfato sind und für Phenyl und Naphthyl Sulfo, C₁-C₄-Alkyl, C₁-C₄-Alkoxy, Carboxy, Halogen, Acylamino, Vinylsulfonyl, substituiertes Alkylsulfonyl, Hydroxy, Amino.

Im einzelnen seien folgende Reste genannt:
2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl, N-Methyl-N-(2-methylamino-4-chlortriazinyl-6)-carbamyl, N-Methyl-N-(2-dimethylamino-4-chlortriazinyl-6)-carbamyl, N-Methyl-bzw. N-Ethyl-N-(2,4-dichlortriazinyl-6)-aminoacetyl, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl-oder -Methoxy-phenol)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluortriazinyl, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied 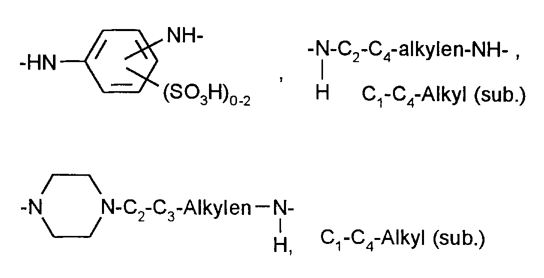 oder im Falle der Sulfatoethylsulfonyl- bzw. Vinylsulfonylgruppe über ein Brückenglied

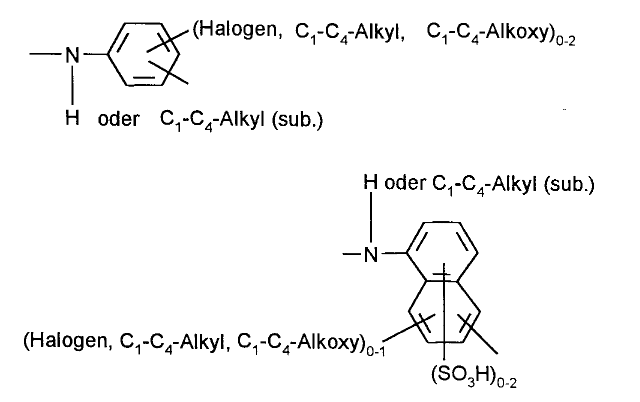

Spezielle Beispiele sind:

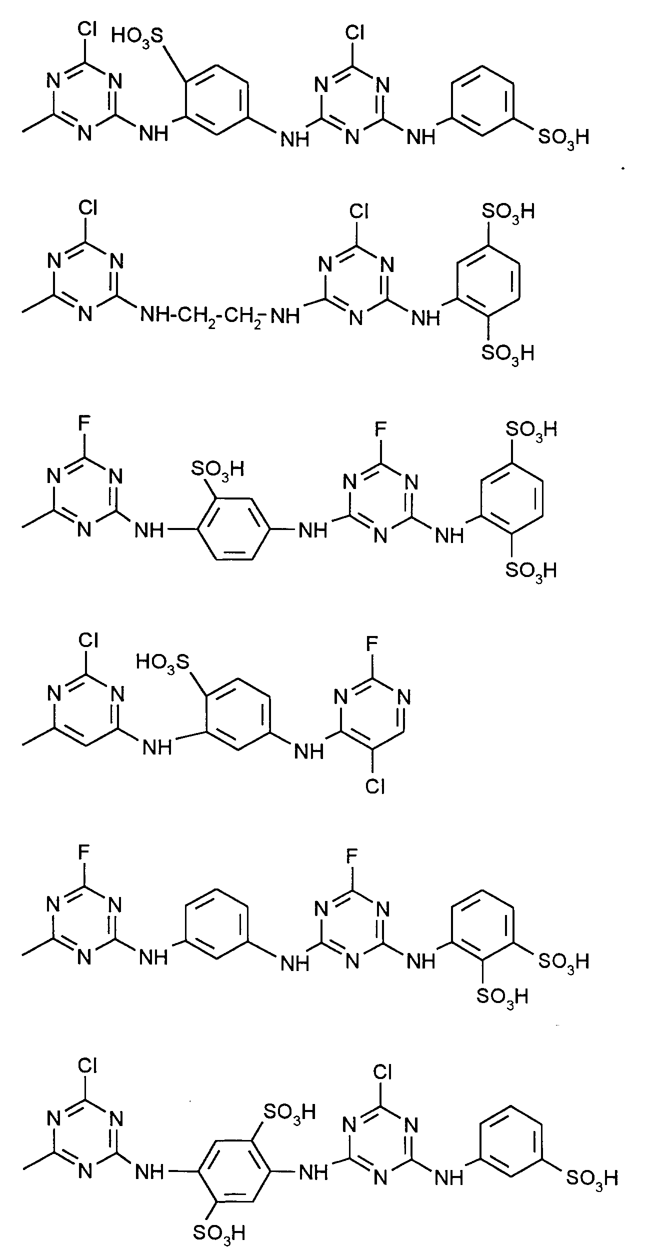

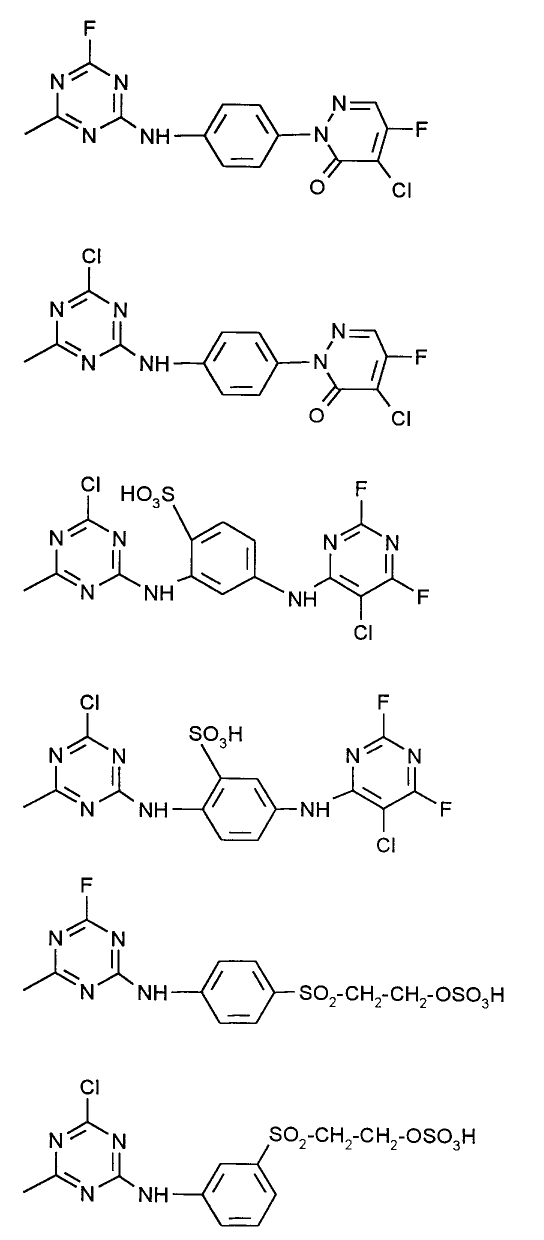

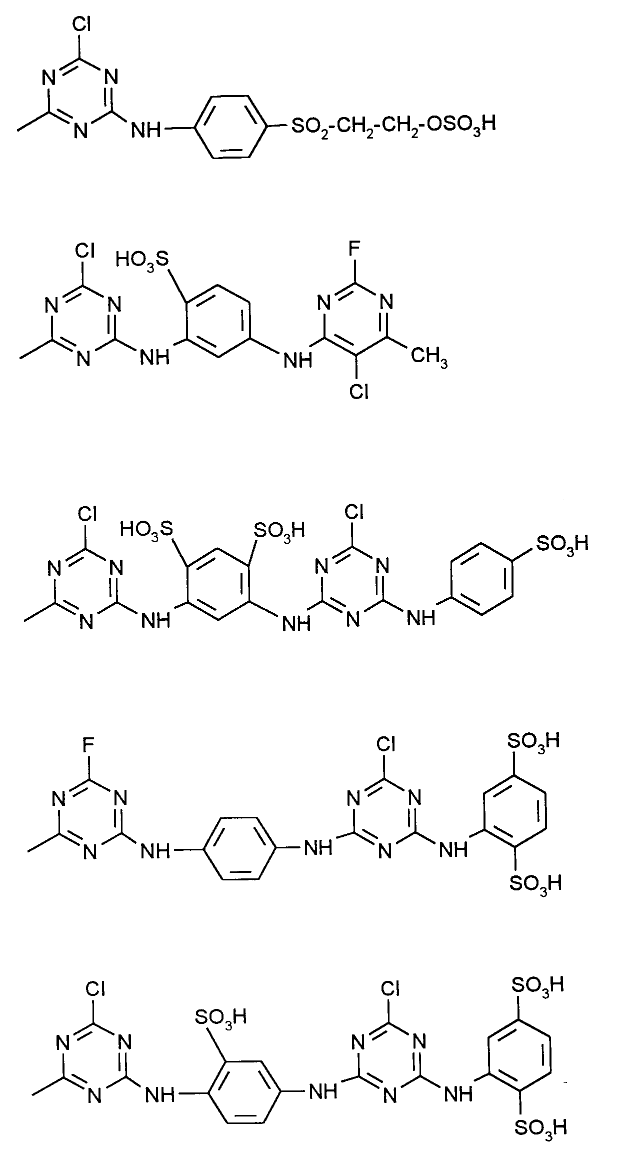

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder - 6-sulfonyl- oder -carbonyl-, 2- oder 3- oder 4-(4',5'-Dichlorpyridazon-6'-yl-1')-phenylsulfonyl- oder -carbonyl-, β-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 6-Fluor-5-chlor-4-pyrimidinyl, 6-Fluor-4-pyrimidinyl, 5-Chlor-6-Fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methylsulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Trismethylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-β-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder - 6-sulfonyl- oder -carbonyl-, 2-Phenylsulfonylbenzthiazol-5- oder -6-sulfonyl- oder -carbonyl-und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl- oder -4- oder -5-sulfonyl-, N-Oxid des 4-Chlor-oder 4-Nitrochinolin-5-carbonyl.

Im Rahmen der Formel (1) sind folgende Farbstoffe bevorzugt, die mindestens eines der folgenden Merkmale 1) bis 7) aufweisen:
1) X¹=X²
   B¹=B²
   D¹=D²
2) K¹=K²
3) B¹=B² und steht für NH
4) Die Reste -B¹-D¹- bzw. -B²-D²- stehen für 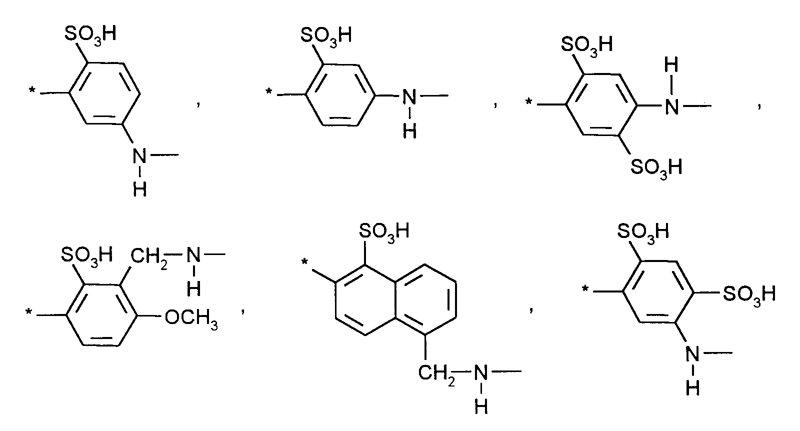 wobei die mit einem Stern gekennzeichnete Bindung an die Azogruppe geknüpft ist.
5) Die Reste X¹ bzw. X² stehen für faserreaktive Reste der Monofluor-triazin-(X³), Monochlortriazin-(X⁴) und Fluorpyrimidin-(X⁵)reihe und haben folgende bevorzugte Bedeutung:
**Monofluortriazinreihe X**^{**3**}**:** 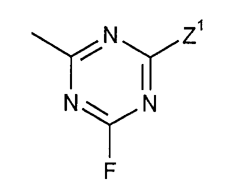 worin Z¹ eine gegebenenfalls substituierte Aminogruppe bedeutet. Als Beispiel für Z¹ seien folgende genannt:
-NH₂, -NHCH₂CH₂SO₃H, -N(CH₃)CH₂CH₂SO₃H, -NHCH₂CH₂OSO₃H, -N(CH₃)CH₂CH₂OSO₃H, -NHCH₂COOH, -N(CH₃)CH₂COOH, -NHCH₃, -N(CH₃)₂, -NHC₂H₅, 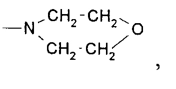 -N(C₂H₅)₂ 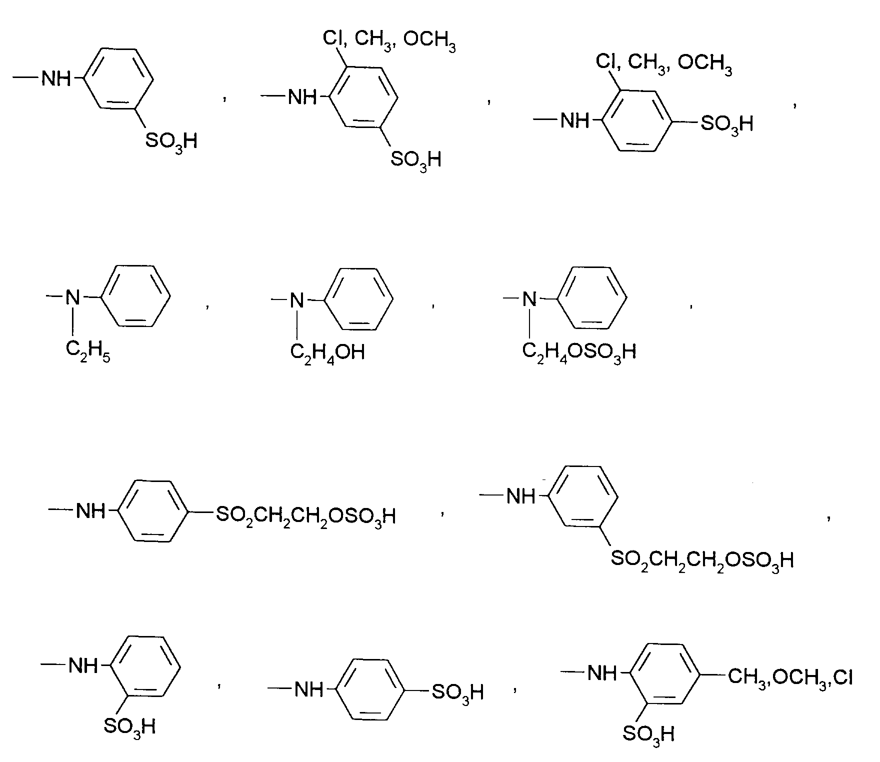 **Monochlortriazinreihe X**^{**4**}**:** 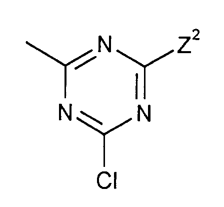 worin Z² die für Z¹ angegebene Bedeutung hat und darüber hinaus für eine gegebenenfalls substituierte C₁-C₄-Alkoxygruppe steht. Beispiele hierfür sind folgende:
OCH₃, OC₂H₅, OCH₂CH₂OH, OCH₂CH₂OCH₃
**Fluorpyrimidinreihe X**^{**5**}**:** 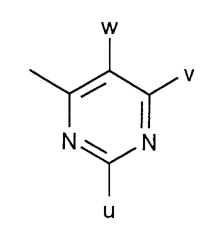 worin u, v und w für H, F, Cl oder CH₃ stehen, mit der Maßgabe, daß mindestens einer der Substituenten u oder v für F steht, als Beispiel sind folgende genannt: 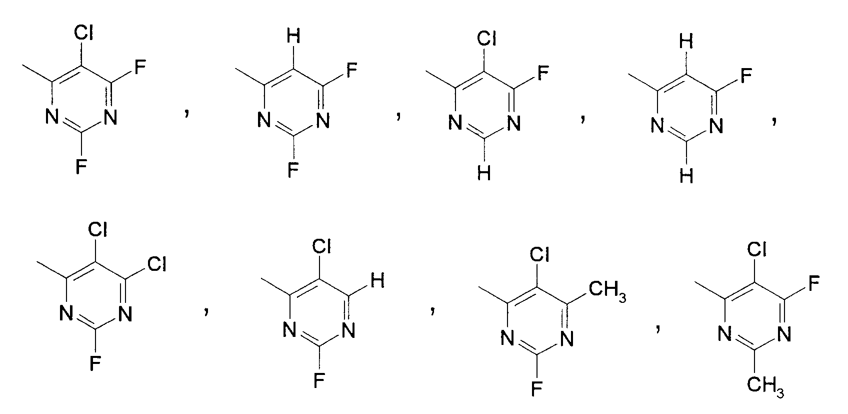
6) Y steht für 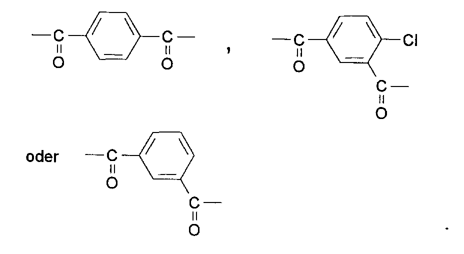
7) K¹ = K² und steht für 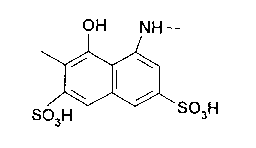
   Besonders bevorzugte Farbstoffe entsprechen den Formeln 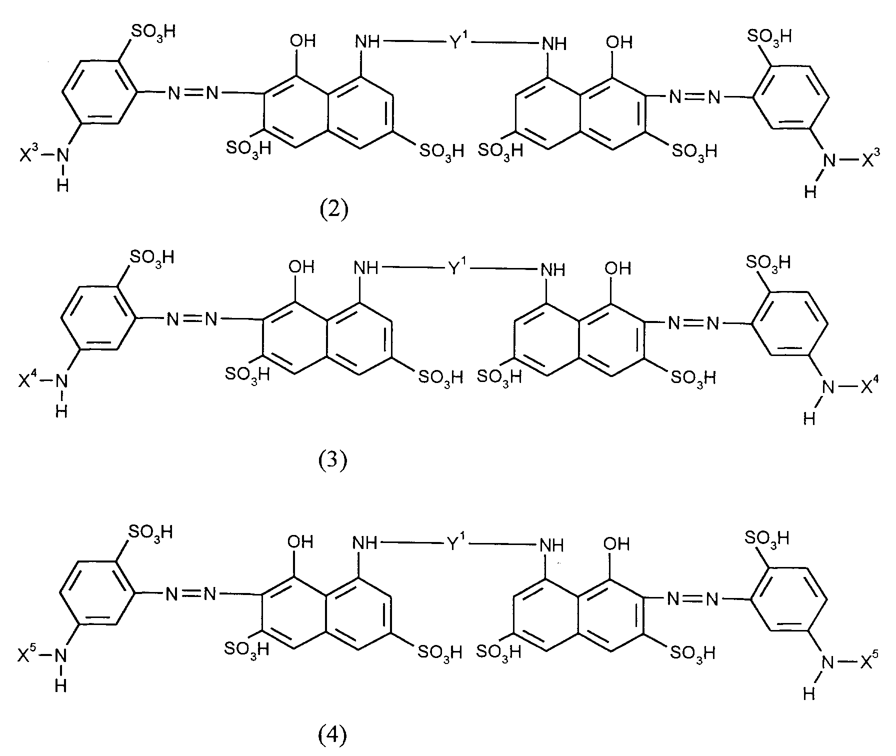 worin Y¹ für 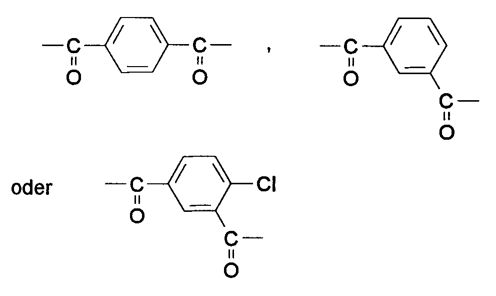 steht
   und X³, X⁴ und X⁵ die angegebene Bedeutung haben.

Gegenstand der Erfindung sind weiterhin Verfahren zur Herstellung von Farbstoffen der Formel (1).

Dabei werden Diazokomponente der Formeln

X¹-B¹-D¹-NH₂ (5a) und

X²-B²-D²-NH₂ (5b),

worin X¹, X², B¹, B², D¹ und D² die angegebene Bedeutung haben,
diazotiert und mit Kupplungskomponenten der Formel

H-K¹-Y-K²-H (6)

worin K¹, K² und Y die angegebene Bedeutung haben, gekuppelt.

Ein weiteres Verfahren besteht darin Aminoazofarbstoffe der Formeln

X¹-B¹-D¹-K¹-H (7a) und

X²-B²-D²-K²-H (7b),

worin X¹, X², B¹, B², D¹, D², K¹ und K² die angegebene Bedeutung haben, mit einer bifunktionellen Acylverbindung der Formel

Cl-Y-Cl (8),

worin Y die angebene Bedeutung hat, zu einem Farbstoff der Formel (1) zu kondensieren.

Weiterhin kann man Disazofarbstoffe der Formel

H-B¹-D¹-N=N-K¹-Y-K²-N=N-D²-B²-H (9)

worin B¹, B², D¹, D², K¹, K² und Y die angegebene Bedeutung haben, mit Reaktivkomponenten der Formeln

A-X¹ (10a) und

A-X² (10b),

worin X¹ und X² die angegebene Bedeutung haben, und A für eine anionisch abspaltbare Gruppe wie Fluor oder Chlor steht, acylieren.

Dabei entsprechen die Reaktionsbedingungen den auf dem Gebiet der Acylierung, Diazotierung und Kupplung üblichen Bedingungen. So erfolgt die Herstellung der Farbstoffe vorzugsweise im wäßrigen Medium.

Im nachfolgenden sind Beispiele von Verbindungen der Formeln (6) und (8) aufgeführt:

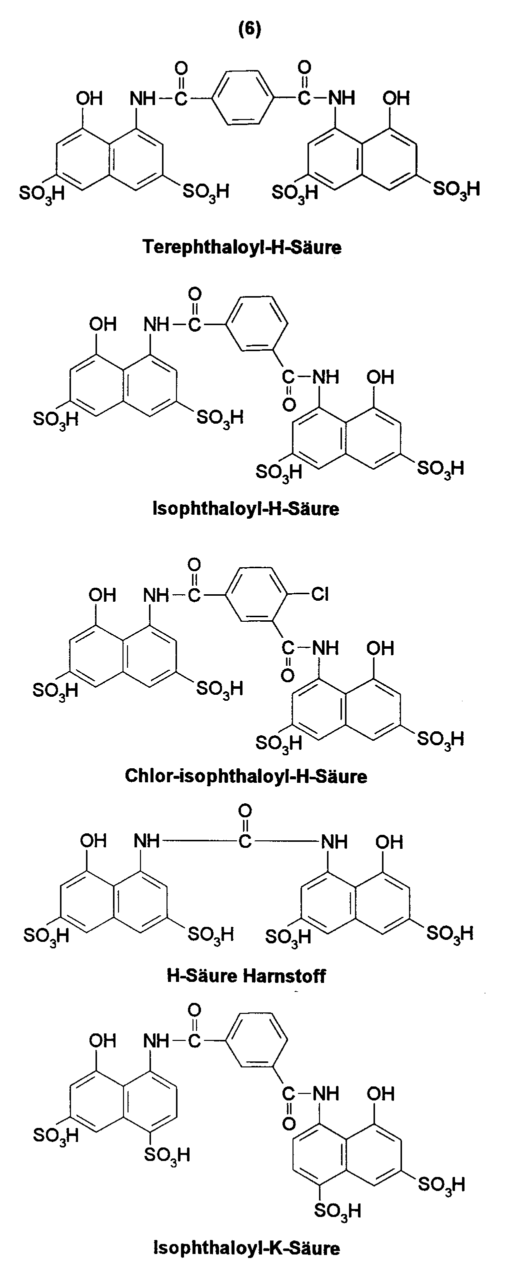

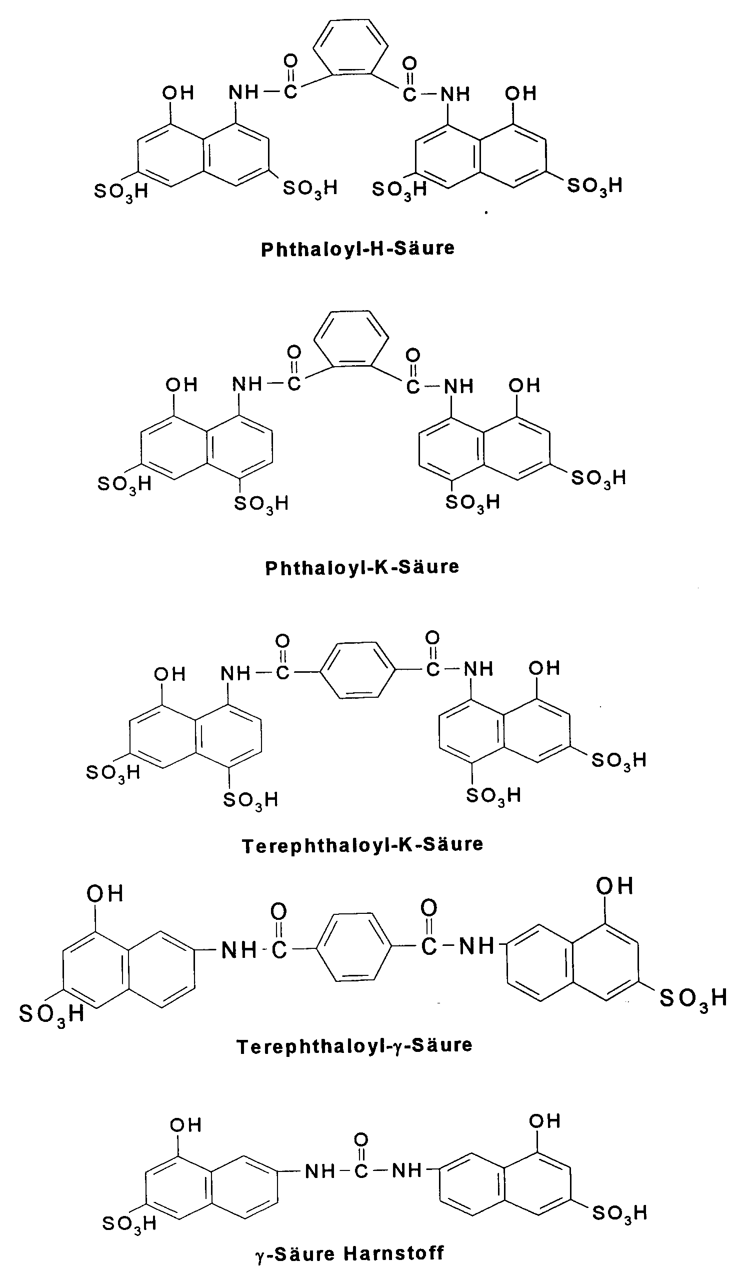

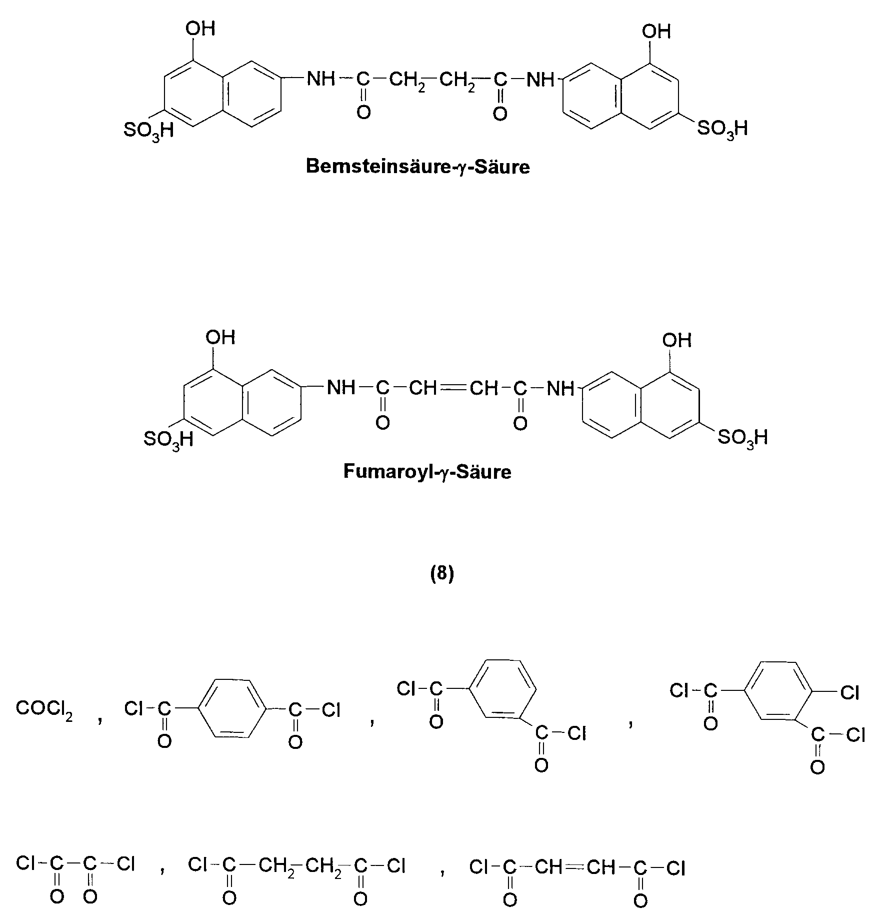

Die Isolierung der nach den vorstehend beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung. Die Farbstoffe können als Feststofformierungen wie auch als konzentrierte Lösungen eingesetzt werden.

In einer bevorzugten Ausführungsform werden die erfindungsgemäßen Farbstoffe als Granulat verwendet. Die Granulate der erfindungsgemäßen Farbstoffe können beispielsweise in folgenden Schritten erhalten werden:

### Mischgranulierung

Dabei wird das Farbstoffpulver mit 15 bis 55 % Wasser - bezogen auf das Gewicht des Pulvers - befeuchtet, anschließend in einem Mischgranulator das Granulat unter trocknenden Bedingungen gebildet und gegebenenfalls entstaubt, wobei das Entstaubungsmittel vorzugsweise als Aerosolgemisch auf das Granulat gesprüht wird.

### Sprühgranulierung

Dabei wird die Synthese-Lösung oder -Suspension in einem fluidisierenden Sprühtrockner gleichzeitig getrocknet und granuliert.

Die Erfindung betrifft weiterhin feste Farbstoffpräparationen, insbesondere Farbstoffpulver oder Farbstoffgranulate, die 30 - 95 Gew.-% eines Reaktivfarbstoffes der Formel (I), 5 - 15 Gew.-% Wasser (Restfeuchte), enthalten, jeweils bezogen auf die Präparation. Daneben können sie noch weitere Zusätze wie anorganische Salze wie Alkalichloride oder Alkalisulfate, Dispergiermittel, Netzmittel, Entstaubungsmittel sowie weitere übliche Stellmittel enthalten.

Bevorzugte Feststoffpräparationen enthalten zusätzlich Puffersubstanzen, die beim Auflösen in der 20-fachen Menge Wasser (bezogen auf das Gewicht der Feststoffpräparation) einen pH-Wert von 3,5 bis 7,5, insbesondere 4,5 bis 6,5, geben. Diese Puffersubstanzen werden vorzugsweise in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 Gew.-% eines Farbstoffes der Formel (I) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5, auf.

Diese Puffersubstanzen werden vorzugsweise in Mengen von 0,1 bis 50, insbesondere 1 bis 20 Gew.-%, bezogen auf das Gesamtgemisch, zugesetzt.

Die verwendeten Puffer sind inert gegenüber den Reaktivgruppen. Beispiele für Puffer sind: Natriumdihydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die erfindungsgemäßen Reaktivfarbstoffe der Formel (I) besitzen wertvolle Farbstoffeigenschaften. Infolge der faserreaktiven Gruppen X¹ und X² weisen sie faserreaktive Eigenschaften auf.

Die erfindungsgemäßen Reaktivfarbstoffe der Formel (I) ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen.

Die erfindungsgemäßen Reaktivfarbstoffe der Formel (I) eignen sich zum Färben und Bedrucken von Hydroxyl- oder Amidgruppen enthaltenden Materialien, wie Textilfasern, Fäden und Geweben aus Wolle, Seide, synthetischen Polyamid-und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzewirkung nach den für Reaktivfarbstoffe bekannt gewordenen Verfahren erfolgt.

Die angegebenen Formeln sind die der entsprechenden freien Säuren. Die Farbstoffe werden im allgemeinen in Form der Alkalisalze, insbesondere der Na-Salze isoliert und zum Färben eingesetzt.

### Beispiel 1

a) Diazotierung
   33,7 g 1-Amino-3-(2',6'-difluor-5'-chlor-pyrimidinyl-4'-amino)-benzolsulfonsäure-6 (Diazokomponente) werden in 500ml Eiswasser angerührt und mit 28 ml 30 %iger Salzsäure versetzt. Man tropft in einer Stunde 70 ml 10%ige Natriumnitritlösung ein. Man rührt eine Stunde nach und entfernt den Überschuß an Nitrit mit Amidosulfonsäure.
b) Kupplung
   In die Suspension der Diazotierung werden 38,4 g Terephthaloyl-H-Säure (Kupplungskomponente) eingetragen und durch Einstreuen von NaHCO₃ ein pH zwischen 7 und 8 eingehalten. Man rührt bei Raumtermperatur solange unter diesen Bedingungen bis die Kupplung beendet ist. Der Farbstoff wird mit Natriumchlorid ausgesalzen, abgesaugt, bei 70°C im Umlufttrockenschrank getrocknet und gemahlen. Es resultiert ein rotes Farbstoffpulver, das sich leicht in Wasser mit roter Farbe löst. Alternativ kann man den Farbstoff durch Sprühtrocknen des Reaktionsansatzes isolieren.
   Nach einem der für Reaktivfarbstoffe üblichen Färbeverfahren erhält man auf Baumwolle klare rote Farbtöne mit guten Allgemeinechtheiten.
   In Form der freien Säure entspricht der Farbstoff der Formel

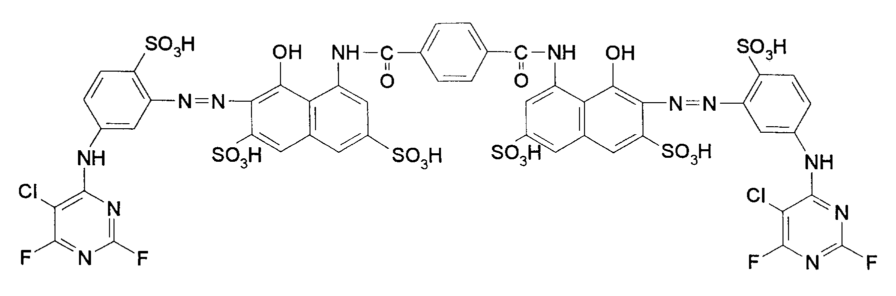

### Beispiel 2

a) Diazotierung
   33,7 g 1-Amino-3-(2',6'-difluor-5'-chlor-pyrimidinyl-4'-amino)-benzolsulfonsäure-6 (Diazokomponente) werden in 500 ml Eiswasser angerührt und mit 28 ml 30 %iger Salzsäure versetzt. Man tropft in einer Stunde 70 ml 10 %ige Natriumnitritlösung ein. Man rührt eine Stunde nach und entfernt den Überschuß an Nitrit mit Amidosulfonsäure.
b) Kupplung
   38,4 g Terephtaloyl-H-Säure werden bei 80°C - 90°C in 1200 ml Wasser gelöst. Diese Lösung läßt man in die Diazotierung einlaufen, wobei man durch Einstreuen von Natriumhydrogencarbonat einen pH zwischen 7 und 8 einhält und die Temperatur durch Kühlung von außen nicht über 25°C - 30°C ansteigen läßt. Die Kupplung ist rasch beendet. Die weitere Aufarbeitung erfolgt wie bei Beispiel 1 angegeben.
   Der Farbstoff ist identisch mit dem nach Beispiel 1 erhaltenen. Weitere wertvolle Farbstoffe erhält man nach den Angaben von Beispiel 1 oder 2, wenn man die in Spalte 2 aufgeführten Diazokomponenten und die in Spalte 3 genannten Kupplungskomponenten verwendet. In der letzten Spalte sind die damit auf Baumwolle erhältlichen Farbtöne aufgeführt.

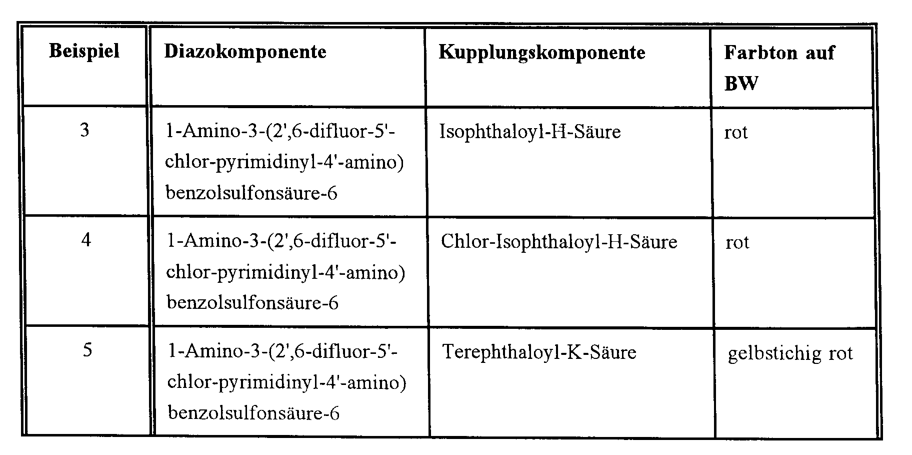

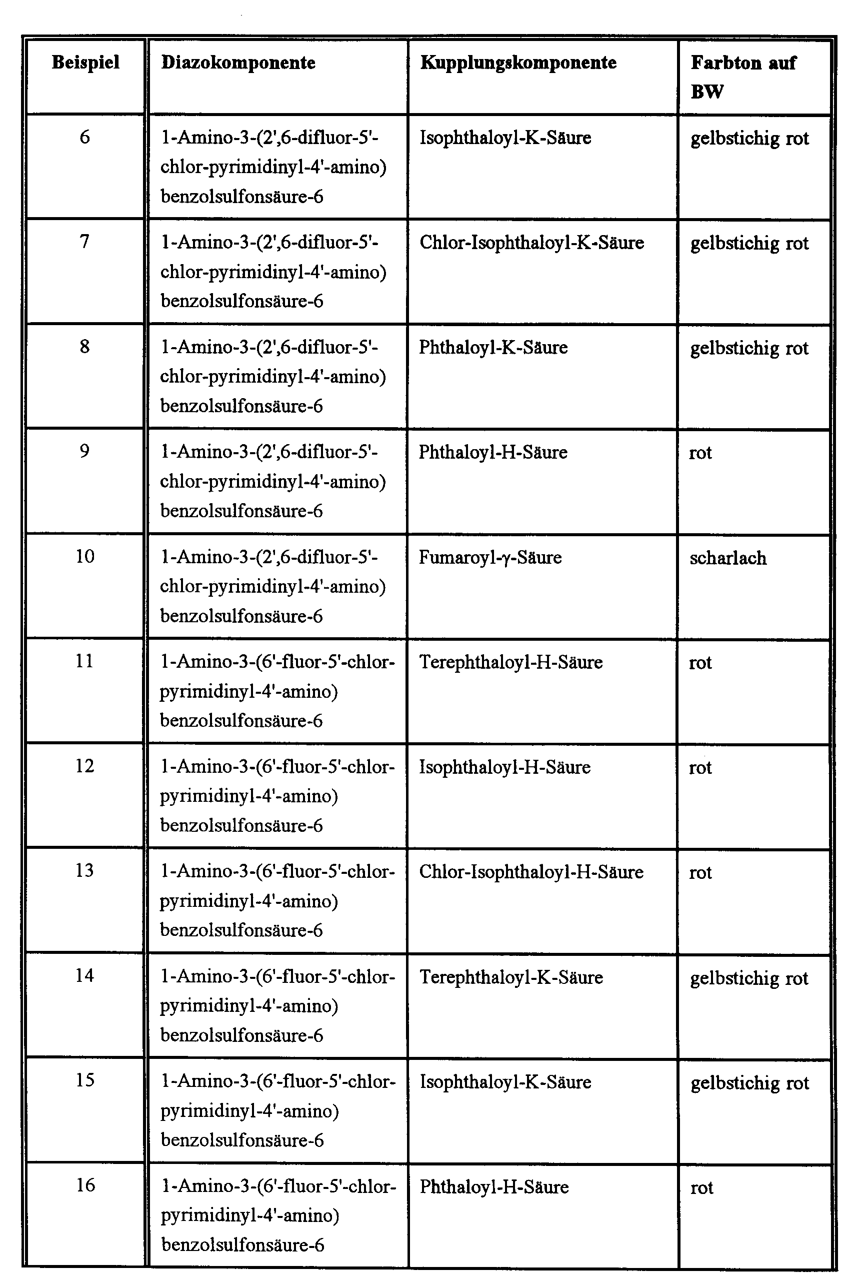

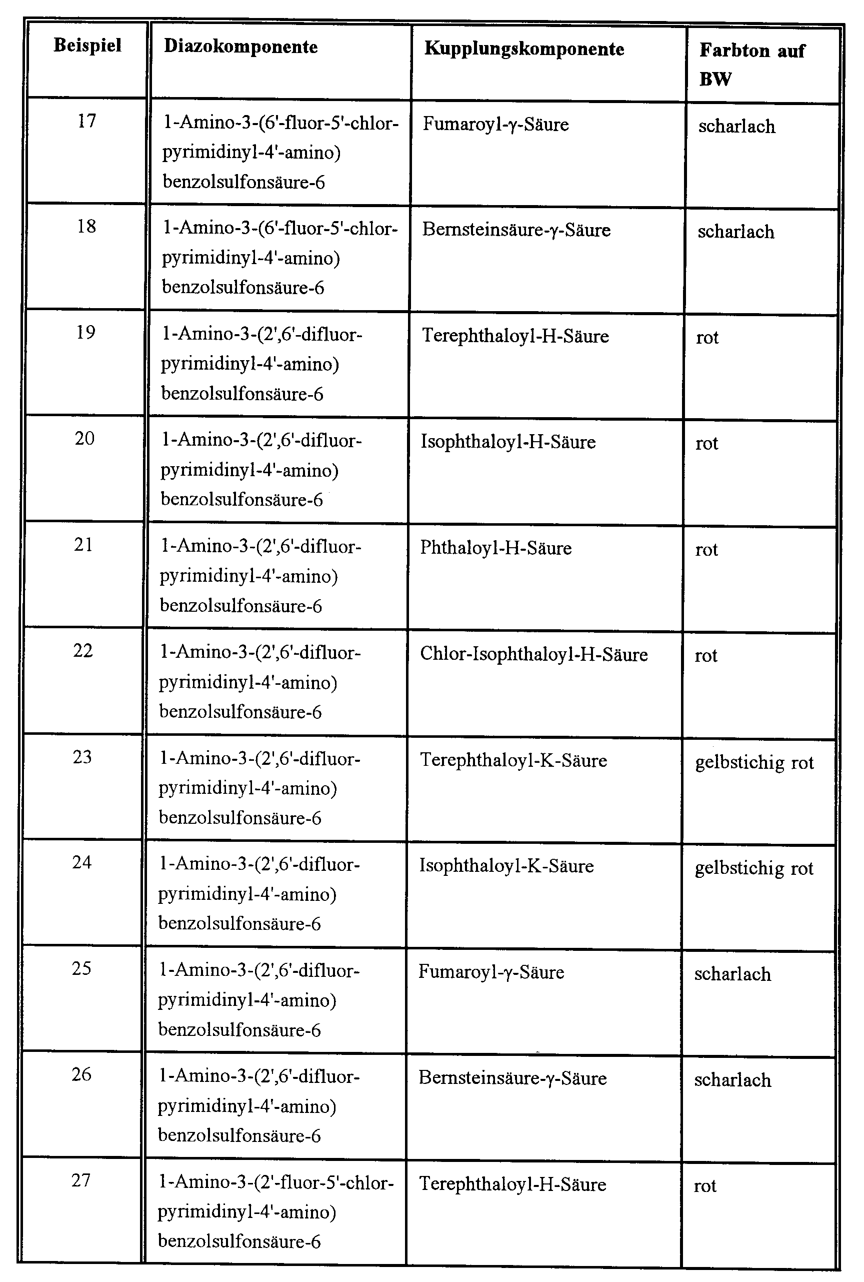

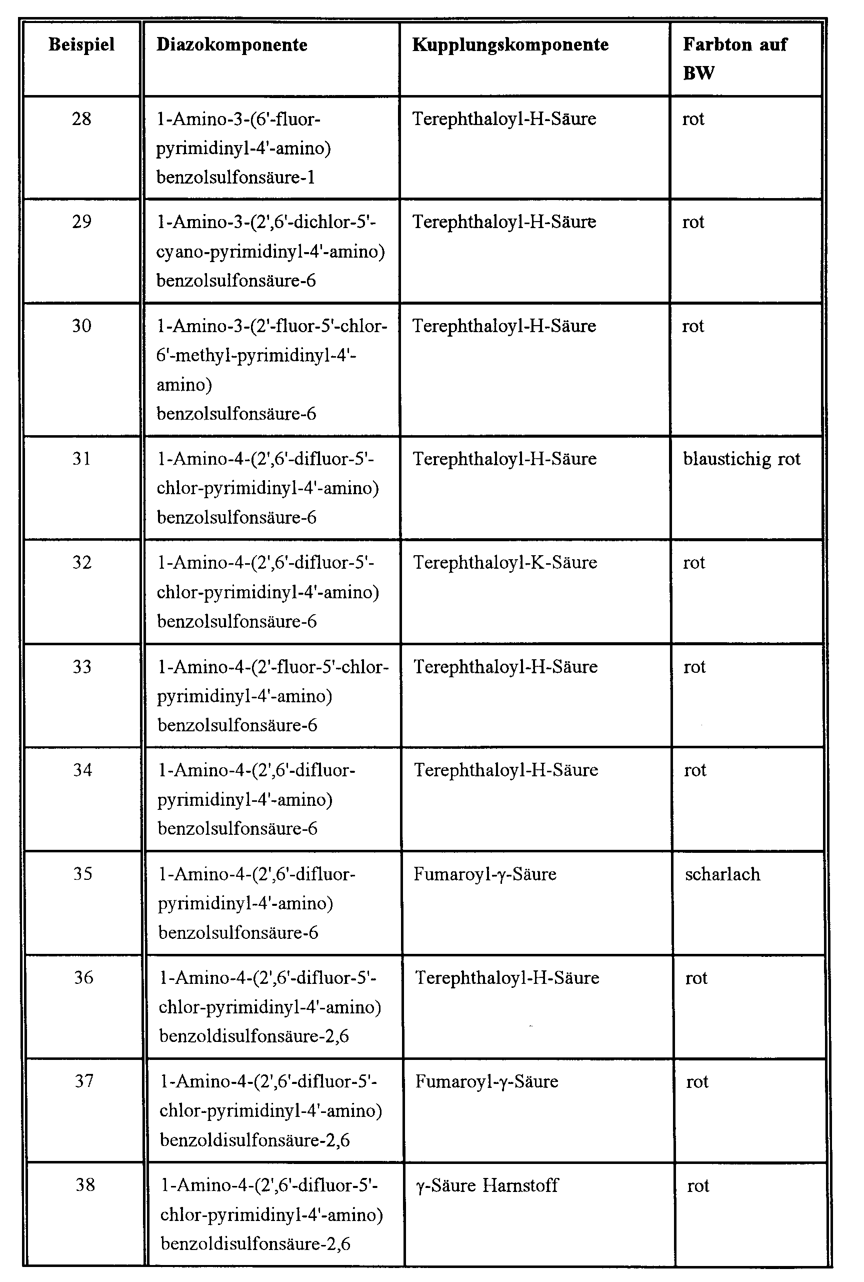

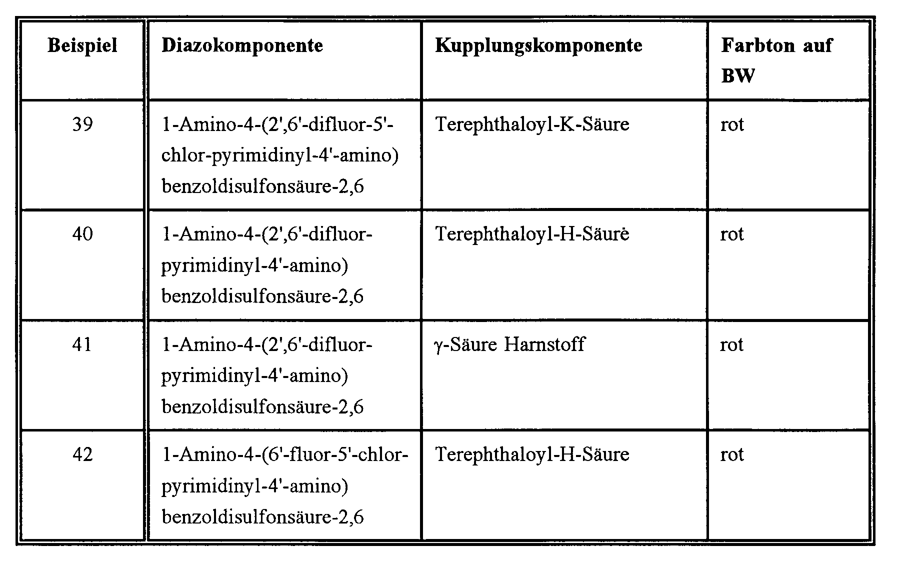

### Beispiel 43

a) Acylierung
   17,3 g o-Sulfanilsäure (Aminkomponente) werden in 300 ml Eiswasser neutral gelöst. Bei 0°C werden in 20 Minuten 13,5 g 2,4,6-Trifluortriazin eingetropft und dabei durch gleichzeitige Zugabe von verdünnter Natronlauge der pH zwischen 5,5 und 6,5 gehalten.
b) Kondensation
   In das nach a) erhaltene Reaktionsgemisch läßt man bei 0°C eine neutrale Lösung von 18,8 g 1,3-Diamino-benzolsulfonsäure-6 (Diaminkomponente) in 200 ml Wasser einlaufen und hält dabei den pH zwischen 6 und 7 durch Zugabe von verdünnter Natronlauge. Anschließend läßt man die Temperatur auf Raumtemperatur ansteigen. In wäßriger Lösung liegt ein Kondensationsprodukt vor, das in Form der freien Säure folgender Struktur entspricht. 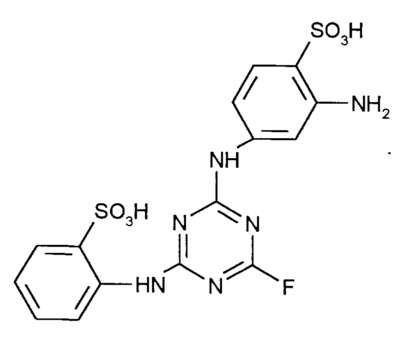
c) Diazotierung
   47,3 g der nach Verfahrensschritt b) erhaltenen Diazokomponente werden in 500 ml Eiswasser verrührt und mit 28 ml 30 %iger Salzsäure versetzt. Man tropft dann 70 ml 10 %ige Natriumnitritlösung ein und rührt 1 Stunde nach, wobei der Überschuß an Nitrit erhalten bleiben soll. Anschließend wird dieser Überschuß mit Amidosulfonsäure zerstört.
d) Kupplung
   Eine ca. 80°C - 90°C warme Lösung von 38,4 g Terephthaloyl-H-Säure in 1200 ml Wasser wird so zu der Diazotierung gegeben, daß der pH zwischen 6 und 8 liegt. Dies wird durch Einstreuen von Natriumhydrogencarbonat erreicht. Durch Kühlung von außen läßt man die Temperatur nicht über 25°C - 30°C ansteigen. Die Kupplung ist rasch beendet und wird mit Natriumchlorid ausgesalzen. Nach dem Absaugen, Trocknen bei 70°C im Umlufttrockenschrank und Mahlen erhält man ein rotes Farbstoffpulver, das sich leicht in Wasser mit roter Farbe löst. Nach einem der für Reaktivfarbstoffe üblichen Färbeverfahren erhält man damit auf Baumwolle klare Rottöne mit guten Allgemeinechtheiten.

In Form der freien Säure entspricht der Farbstoff der Formel

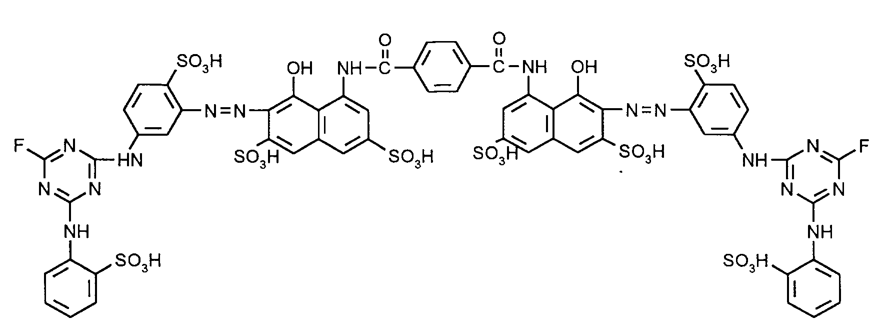

Nach den Angaben dieses Beispiels erhält man weitere wertvolle Farbstoffe, wenn man die in Spalte 2 genannten Aminkomponenten, die in Spalte 3 aufgeführten Diaminkomponenten und die Spalte 4 beschriebenen Kupplungskomponenten verwendet. Die mit diesen Farbstoffen auf Baumwolle erhaltenen Farbtöne sind in der letzten Spalte aufgeführt.

| **Beispiel** | **Aminkomponente** | **Diaminkomponente** | **Kupplungskomponente** | **Farbton auf BW** |
|---|---|---|---|---|
| 44 | 1-Amino-2-methylbenzol-5-sulfonsäure | 1,3-Diamino-benzol-4-sulfonsäure | Terephthaloyl-H-Säure | rot |
| 45 | 1-Amino-2-methoxybenzol-5-sulfonsäure | 1,3-Diamino-benzol-4-sulfonsäure | Terephthaloyl-H-Säure | rot |
| 46 | 1-Amino-2-chlorbenzol-5-sulfonsäure | 1,3-Diamino-benzol-4-sulfonsäure | Terephthaloyl-H-Säure | rot |
| 47 | 1-Amino-2-methyl-4-sulfonsäure | 1,3-Diamino-benzol-4-sulfonsäure | Terephthaloyl-H-Säure | rot |
| 48 | 1-Amino-benzol-2-sulfonsäure | 1,3-Diamino-benzol-4-sulfonsäure | Isophthaloyl-H-Säure | rot |
| 49 | 1-Amino-benzol-2-sulfonsäure | 1,3-Diamino-benzol-4-sulfonsäure | Terephthaloyl-K-Säure | rot |
| 50 | 2-Amino-naphthalinsulfonsäure-1 | 1,3-Diamino-benzol-4-sulfonsäure | Terephthaloyl-H-Säure | rot |

### Beispiel 51

a) Acylierung
   17,3 g m-Sulfanilsäure (Aminkomponente) werden in 300 ml Eiswasser neutral gelöst. Man streut dann 18,9 g Cyanurchlorid ein und läßt den pH auf 3 abfallen, wo er dann durch Zutropfen von verdünnter Natronlauge gehalten wird.
b) Kondensation
   In das nach a) erhaltene Reaktionsgemisch gibt man eine neutrale Lösung von 18,8 g 1,3-Diamino-benzolsulfonsäure-6, hält den pH mit verdünnter Natronlauge zwischen 6 und 7 und erhöht die Temperatur auf 20°C - 30°C. In wäßriger Lösung liegt dann ein Kondensationsprodukt vor, das in Form der freien Säure folgender Struktur entspricht. 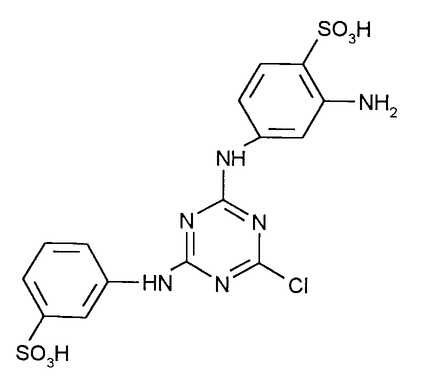
c) Diazotierung
   45,6 g der nach vorstehend beschriebenen Verfahren erhaltenen Diazokomponente werden in 500 ml Eiswasser verrührt und mit 28 ml 30 %iger Salzsäure versetzt. Man tropft dann 70 ml 10 %ige Natriumnitritlösung ein und rührt ca. eine Stunde nach, wobei der Überschuß an Nitrit erhalten bleiben soll. Anschließend wird dieser Überschuß mit Amidosulfonsäure zerstört.
d) Kupplung
   Eine 80°C - 90°C warme Lösung von 38,4 g Terephthaloyl-H-Säure in 1200 ml Wasser wird zu der Diazotierung gegeben. Dabei hält man durch Einstreuen von Natriumhydrogencarbonat den pH zwischen 7 und 8. Durch Kühlung von außen läßt man die Temperatur nicht über 25°C - 30°C ansteigen. Die Kupplung ist rasch beendet. Der Farbstoff wird mit Natriumchlorid ausgesalzen. Nach dem Absaugen, Trocknen bei 70°C im Umlufttrockenschrank und Mahlen erhält man ein rotes Farbstoffpulver, das sich leicht in Wasser mit roter Farbe löst. Nach einem der für Reaktivfarbstoffe üblichen Färbeverfahren erhält man damit auf Baumwolle klare rote Färbungen mit guten Allgemeinechtheiten. In Form der freien Säure entspricht der Farbstoff der Formel

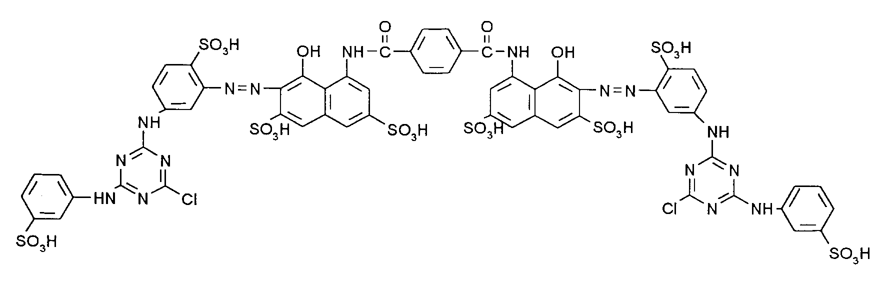

Nach den Angaben dieses Beispiels erhält man weitere wertvolle Farbstoffe, wenn man die in Spalte 2 genannten Aminkomponenten, die in Spalte 3 aufgeführten Diaminkomponenten und die in Spalte 4 beschriebenen Kupplungskomponenten verwendet. Die mit diesen Farbstoffen auf Baumwolle erhaltenen Farbtöne sind in der letzten Spalte aufgeführt.

| **Beispiel** | **Aminkomponente** | **Diaminkomponente** | **Kupplungskomponente** | **Farbton auf BW** |
|---|---|---|---|---|
| 52 | 1-Amino-benzol-2-sulfonsäure | 1,3-Diamino-benzol-4-sulfonsäure | Terephthaloyl-H-Säure | rot |
| 53 | 1-Amino-benzol-2-sulfonsäure | 1,3-Diamino-benzol-4-sulfonsäure | Isophthaloyl-H-Säure | rot |
| 54 | 1-Amino-benzol-2-sulfonsäure | 1,3-Diamino-benzol-4-sulfonsäure | Chlor-isophthaloyl-H-Säure | rot |
| 55 | 1-Amino-benzol-2-sulfonsäure | 1,3-Diamino-benzol-4-sulfonsäure | Terephthaloyl-K-Säure | gelbstichig rot |
| 56 | 1-Amino-benzol-2-sulfonsäure | 1,3-Diamino-benzol-4-sulfonsäure | Fumaroyl-γ-Säure | scharlach |
| 57 | 1-Amino-benzol-2,5-disulfonsäure | 1,3-Diamino-benzol-4-sulfonsäure | Terephthaloyl-H-Säure | rot |
| 58 | 1-Amino-benzol-2,5-disulfonsäure | 1,3-Diamino-benzol-4-sulfonsäure | Isophthaloyl-H-Säure | rot |
| 59 | 1-Amino-benzol-2,5-disulfonsäure | 1,3-Diamino-benzol-4-sulfonsäure | Terephthaloyl-K-Säure | gelbstichig rot |
| 60 | 1-Amino-benzol-3-sulfonsäure | 1,3-Diamino-benzol-4-sulfonsäure | Isophthaloyl-H-Säure | rot |

### Beispiel 61

0,05 mol des Farbstoffs der Formel 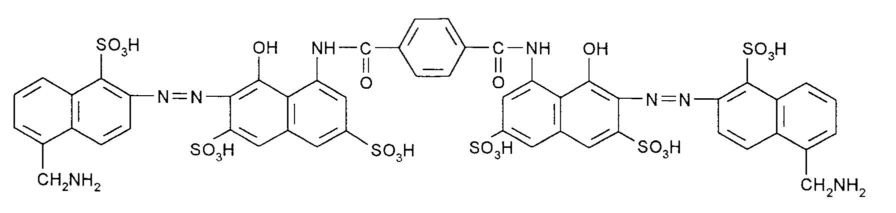 (erhältlich durch Kuppeln von diazotierter 2-Amino-5-aminomethyl-naphthalin-1-sulfonsäure auf Terephthaloyl-H-Säure im neutralen Medium) werden in 1 l Wasser angerührt. Bei 20 - 22° C werden 16,9 g 2,4,6-Trifluor-5-chlorpyrimidin eingetropft, wobei man durch gleichzeitiges Zutropfen von verdünnter Natronlauge den pH bei 8,5 - 8,8 hält. Nach beendeter Kondensation wird der Farbstoff ausgesalzen. Nach dem Absaugen, Trocknen bei 70° C im Umlufttrockenschrank und Mahlen erhält man ein rotes Farbstoffpulver, das sich leicht in Wasser mit roter Farbe löst. Der Farbstoff entspricht in Form der freien Säure der Formel

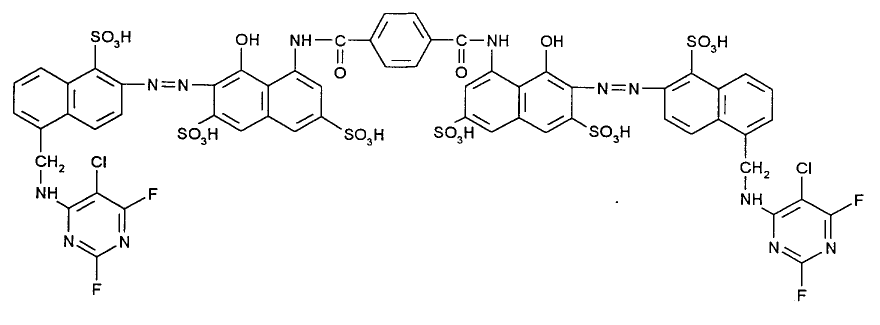

Nach einem der für Reaktivfarbstoffe üblichen Färbeverfahren erhält man damit auf Baumwolle klare blaustichig rote Färbungen mit guten Allgemeinechtheiten.

Nach den Angaben dieses Beispiels erhält man weitere wertvolle Reaktivfarbstoffe, die Baumwolle blaustichig rot färben, wenn man anstelle von 2,4,6-Trifluor-5-chlor-pyrimidin die nachfolgend in Spalte 2 aufgeführten Reaktivkomponenten verwendet und dabei während der Kondensation die in Spalte 3 genannten Temperaturen einhält.

| **Beispiel** | **Reaktivkomponente** | **Temperatur** |
|---|---|---|
| 62 | 2,4,6-Trifluor-pyrimidin | 15 - 25° |
| 63 | 4,6-Difluor-5-chlor-pyrimidin | 30 - 40° |
| 64 | 2-(2'-Sulfophenylamino)-4,6-difluor-triazin | 0 - 10° |
| 65 | 2-(2'-Sulfophenylamino)-4,6-dichlor-triazin | 20 - 30° |
| 66 | 2-(3'-Sulfophenylamino)-4,6-dichlor-triazin | 20 - 30° |
| 67 | 2,4,6-Trichlor-5-cyano-pyrimidin | 40 - 50° |
| 68 | 2,4-Difluorpyrimidin | 15 - 25° |
| 69 | 4,6-Difluorpyrimidin | 15 - 25° |
| 70 | 2,4,6-Trichlortriazin | 0 - 5° |
| 71 | 2,4-Difluor-5-chlor-pyrimidin | 30 - 40° |

## Patentansprüche

1. Azoreaktivfarbstoffe der Formel
X¹-B¹-D¹-N=N-K¹-Y-K²-N=N-D²-B²-X² (1)
worin
D¹ und D² gleich oder verschieden sind und für einen gegebenenfalls substituierten Benzol- oder Naphthalinkern stehen;
B¹ und B² gleich oder verschieden sind und ein zweiwertiges Brückenglied bedeuten;
X¹ und X² gleich oder verschieden sind und für einen heterocyclischen faserreaktiven Rest stehen;
Y für einen bifunktionellen Acylrest der aliphatischen oder aromatischen Reihe steht;
K¹ und K² gleich oder verschieden sind und für den Rest einer Kupplungskomponente mit wenigstens 2 Sulfogruppen oder der Formel 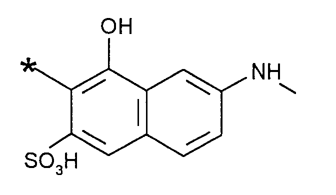
stehen,
wobei die mit einem Stern gekennzeichnete Bindung an die Azogruppe geknüpft ist.

2. Reaktivfarbstoff gemäß Anspruch 1, dadurch gekennzeichnet, daß K¹ und K² gleich oder verschieden sind und, in Form der freien Säure, für den Rest einer Kupplungskomponente folgender Struktur stehen 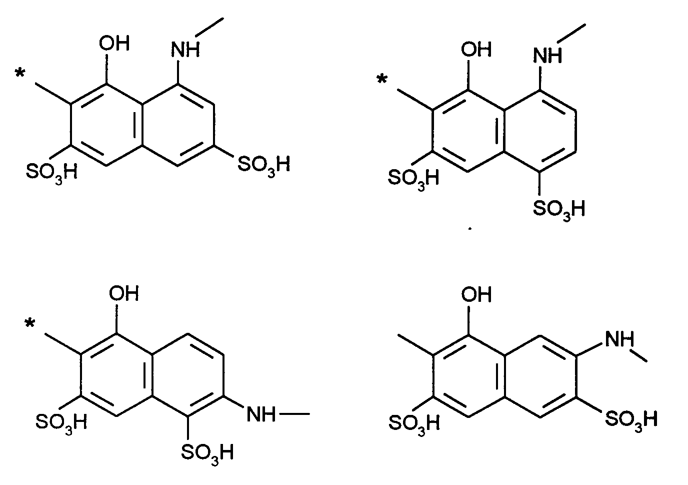 wobei die mit einem Stern gekennzeichnete Bindung an die Azogruppe der Verbindung (1) geknüpft ist.

3. Reaktivfarbstoff gemäß wenigstens einem der vorhergehenden Ansprüche, dadurch gekennzeichnet, daß B¹ eine der folgenden Bedeutungen hat 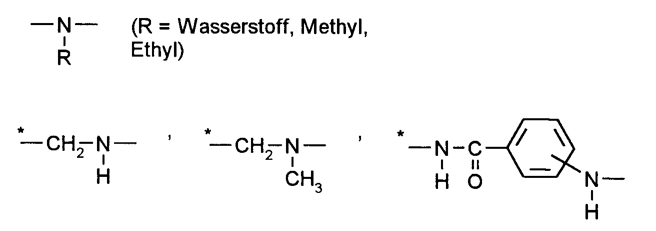 wobei die mit einem Stern gekennzeichnete Bindung an den Rest D¹ bzw. D² geknüpft ist.

4. Reaktivfarbstoff gemäß wenigstens einem der vorhergehenden Ansprüche, dadurch gekennzeichnet, daß Y eine der folgenden Bedeutungen hat 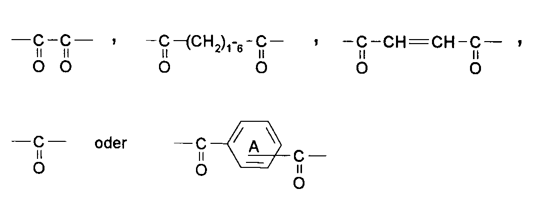 worin die beiden Carbonylgruppen des Benzolringes A in o-, m- oder p-Stellung zueinander stehen und der Benzolring A durch Cl, CH₃ oder OCH₃ substituiert sein kann.

5. Reaktivfarbstoff gemäß wenigstens einem der vorhergehenden Ansprüche, dadurch gekennzeichnet, daß X¹ und X² gleich oder verschieden sind und einen Monofluortriazin-, Monochlortriazin- oder Fluorpyrimidin-Rest bedeuten.

6. Reaktivfarbstoff gemäß wenigstens einem der vorhergehenden Ansprüche, dadurch gekennzeichnet, daß die Reste -B¹-D¹- bzw. -B²-D²- für 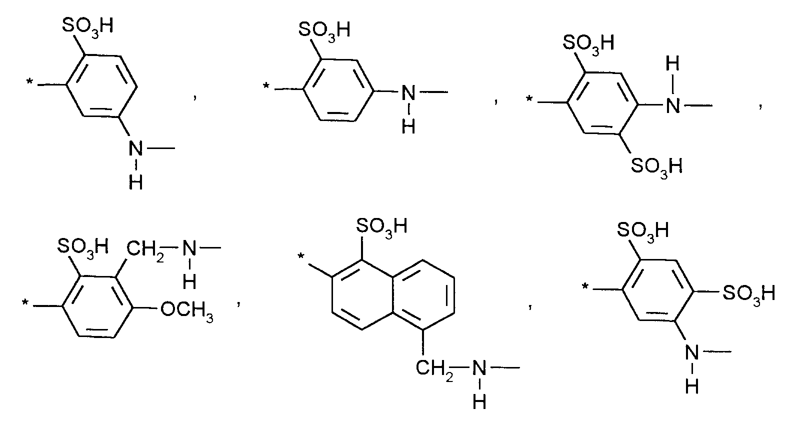 stehen und
wobei die mit einem Stern gekennzeichnete Bindung an die Azogruppe geknüpft ist.

7. Reaktivfarbstoff gemäß wenigstens einem der vorhergehenden Ansprüche, dadurch gekennzeichnet, daß er einer der folgenden Formeln entspricht 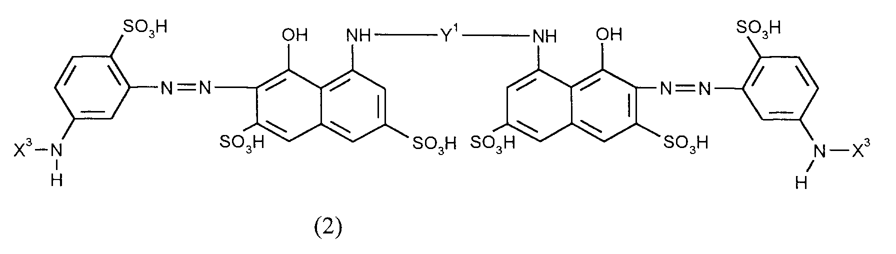 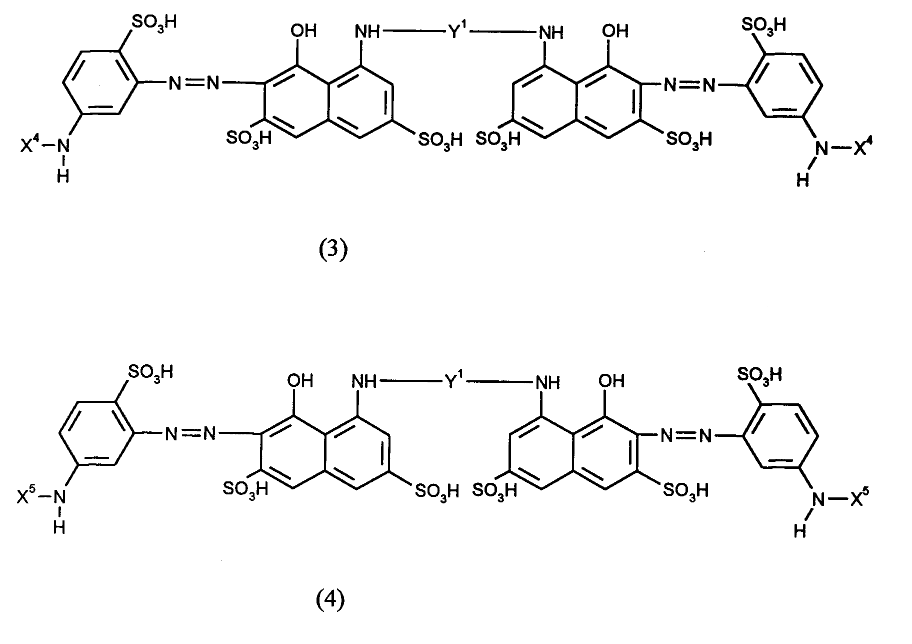 worin Y¹ für 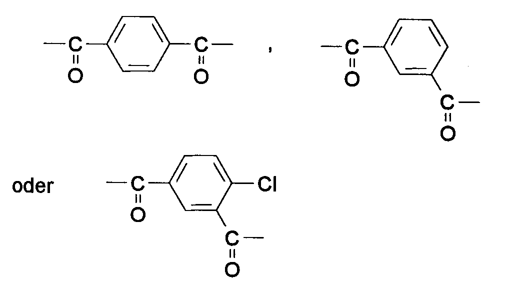 steht
und wobei bedeuten
X³ 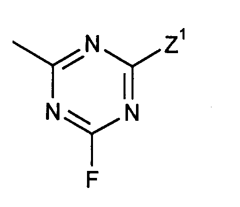 worin Z¹ eine gegebenenfalls substituierte Aminogruppe bedeutet,
X⁴ 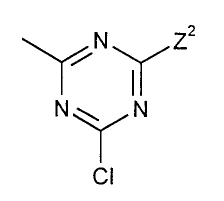 worin Z² die für Z¹ angegebene Bedeutung hat und darüber hinaus für eine gegebenenfalls substituierte C₁-C₄-Alkoxygruppe steht,
X⁵ 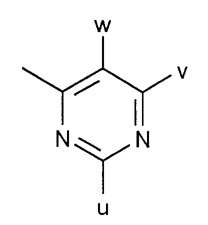 worin u, v und w für H, F, Cl oder CH₃ stehen, mit der Maßgabe, daß mindestens einer der Substituenten u oder v für F steht.

8. Verfahren zur Herstellung einer Verbindung der Formel (1)
X¹-B¹-D¹-N=N-K¹-Y-K²-N=N-D²-B²-X² (1),
dadurch gekennzeichnet, daß man Diazokomponenten der Formeln
X¹-B¹-D¹-NH₂ (5a) und
X²-B²-D²-NH₂ (5b),
diazotiert und mit Kupplungskomponenten der Formel
H-K¹-Y-K²-H (6)
worin K¹, K² und Y die angegebene Bedeutung haben, kuppelt,
oder daß man Aminoazofarbstoffe der Formeln
X¹-B¹-D¹-K¹-H (7a) und
X²-B²-D²-K²-H (7b),
mit einer bifunktionellen Acylverbindung der Formel
Cl-Y-Cl (8),
zu einem Farbstoff der Formel (1) zu kondensiert oder daß man Disazofarbstoffe der Formel
H-B¹-D¹-N=N-K¹-Y-K²-N=N-D²-B²-H (9)
mit Reaktivkomponenten der Formel
A-X¹ (10a) und
A-X² (10b),
worin A für eine anionisch abspaltbare Gruppe wie Fluor oder Chlor steht, acyliert,
wobei die Substituenten die in Anspruch 1 angegebene Bedeutung haben.

9. Verfahren zum Färben und/oder Bedrucken von Hydroxyl- oder Amidgruppen enthaltenden Materialien mit einem Reaktivfarbstoff dadurch gekennzeichnet, daß ein Reaktivfarbstoff gemäß Anspruch 1 verwendet wird.
